# EUROPÄISCHE PATENTSCHRIFT

(11) **EP 0 970 447 B1**
(45) Veröffentlichungstag und Bekanntmachung des Hinweises auf die Patenterteilung: **06.10.2004**
(21) Anmeldenummer: 98909321.6
(22) Anmeldetag: 03.02.1998
(51) Int. Cl.: G07F 7/08

(54) **NETZWERKUNTERSTÜTZTES CHIPKARTEN-TRANSAKTIONSVERFAHREN**
NETWORK-ASSISTED CHIP CARD TRANSACTION PROCESS
PROCEDE DE TRANSACTION ASSISTEE PAR UN RESEAU AU MOYEN DE CARTES A PUCE

(30) Priorität: 12.03.1997 DE 19710249
(43) Veröffentlichungstag der Anmeldung: 12.01.2000
(73) Patentinhaber: Siemens Nixdorf Informationssysteme GmbH, 81739 München (DE)
(72) Erfinder: WIEHLER, Gerhard, D-82223 Eichenau (DE)
(74) Vertreter: Berg, Peter, Dipl.-Ing.
(86) Internationale Anmeldenummer: PCT/DE1998/000297
(87) Internationale Veröffentlichungsnummer: WO 1998/040851

(56) Entgegenhaltungen:
- EP-A- 0 542 298
- WO-A-96/33476
- US-A- 5 544 086
- KRAWCZYK H: "SKEME: A VERSATILE SECURE KEY EXCHANGE MECHANISM FOR INTERNET" PROCEEDINGS OF THE SYMPOSIUM ON NETWORK AND DISTRIBUTED SYSTEM SECURITY, 1996, Seiten 114-127, XP002028404

## Beschreibung

### Technisches Gebiet

Die Erfindung betrifft Verfahren und Anordnungen für die elektronische Abrechnung von Leistungen, insbesondere durch Zahlungen, mittels Chipkarten unter Verwendung von offenen Datennetzwerken.

### Stand der Technik

Zur Bezahlung von Leistungen werden Karten mit eingebettetem Prozessor oder Speicher, als Chipkarten bekannt, eingesetzt. Hierbei sind eine Anzahl verschiedener Kartenarten bekannt, die als 'Creditcard', 'Debitcard', vorausbezahlte Geldkarte oder als Geldkarte mit einer aufladbaren elektronischen Börse bekannt sind.

In vielen Ländern gibt es heute Geldkarten-Lösungen, die jeweils national entwickelt und spezifiziert sind; z.B. "Avant" in Finnland, "Danmønt" in Dänemark, die EC-Karte mit Chip in Deutschland, "Quick" in Österreich. Diese Lösungen sind in Technik und Verfahren untereinander inkompatibel.

Die Kreditkartenorganisationen testen derzeit Lösungen, die international zum Einsatz kommen sollen, z.B. "Visacash" von Visa, "Mondex" von Mastercard, "Clip" von Europay, "Proton" von American Express. Diese Lösungen sind gleichfalls untereinander inkompatibel. Obwohl diese Gruppe von Anbietern einen gemeinsamen Standard, der derzeit unter dem Arbeitstitel "EMV" bekannt ist, spezifiziert hat, so werden hierbei bereits ausgegebene Karten und im Markt befindliche Lösungen nicht berücksichtigt.

Es hat sich gezeigt, daß ein Teil dieser Karten zwar durchaus größtenteils dieselben Hardware-Einrichtungen nutzen, aber durch unterschiedliche Software-Programme und -Protokolle und spezifische Sicherheitsmodule in dem die Chipkarte aufnehmenden Terminal unterschieden sind. Demgemäß wurden Lösungen bekannt, bei denen ein Chipkarten-Terminal, das die Chipkarte während eines Bezahlvorgangs bedient, mit einer Anzahl von verschiedenen Software-Moduln ausgestattet ist und an das mehrere Sicherheitsmodule angeschlossen sind. Diese Lösung ist jedoch, weil teuer und unflexibel, nicht für den flächendeckenden Einsatz geeignet.

Weitere Systeme zur elektronischen Abwicklung von bargeldlosen Transaktionen über Datennetzwerke sind aus den Druckschriften EP 542 298 A2, WO 96/33476 A2 und US 5544086 bekannt. In den genannten Druckschriften werden jedoch keine Lösungen beschrieben, durch die eine Unterstützung von Chipkarten unterschiedlichen Typs vereinfacht würde.

Aufgabe der Erfindung ist es daher, eine Lösung anzugeben, bei der flächendeckend eine große Anzahl verschiedener Chipkarten anwendbar ist, ohne daß jedes Terminal für alle diese Chipkarten ausgerüstet sein muß.

### Darstellung der Erfindung

Zur Abwicklung von Transaktionen, die durch eine Chipkarte gesichert werden, verwendet die Erfindung ein Chipkarten-Terminal, das an ein offenes Datenübertragungsnetzwerk angeschlossen ist, über das es mit verschiedenen Abwicklern von Transaktionen eine manipulationsgeschützte Verbindung aufbauen kann. Ein jeweiliger Abwickler ist hierbei mit einem oder mehreren Transaktionshosts verbunden und umfasst mindestens einen Sicherheitsmodul zur Sicherung von Transaktionen gegenüber dem Transaktionshost. Das Terminal enthält ein Betriebsprogramm, welches nach dem Verbinden der Chipkarte mit dem Terminal einen Code für ein Transaktionsverfahren, nach dem die Transaktion durchzuführen ist, anhand von aus der Chipkarte auszulesenden Angaben bestimmt. Aus dem Code des Transaktionsverfahrens wird die Netzwerkadresse eines Abwicklers bestimmt, woraufhin das Betriebsprogramm eine durch kryptographische Verfahren gesicherte Verbindung zwischen Terminal und Abwickler aufbaut, und danach die Transaktion durch Vermittlung zwischen Chipkarte und Abwickler abwickelt, wobei der Abwickler die Transaktionsschritte gegenüber dem Transaktionshost vermittelt.

### Kurzbeschreibung der Zeichnungen

Es zeigen
- Fig. 1: eine schematische Übersicht über die Komponenten bei einer Transaktionsabwicklung mit einer Chipkarte gemäß der Erfindung,
- Fig. 2: eine Fig. 1 entsprechende Darstellung des Standes der Technik.

### Beschreibung der Erfindung

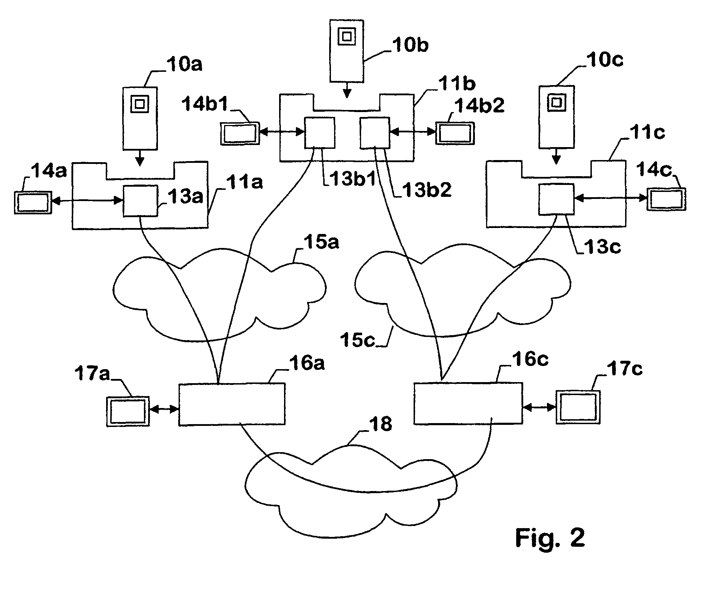

In Fig. 2 ist eine bekannte Anordnung zur Transaktionsabwicklung von Zahlungen mit Chipkarten dargestellt. Im folgenden stehen dabei Zahlungen stellvertretend für alle Arten von Transaktionen, bei denen Wert auf zuverlässige Abwicklung gelegt wird. Als Chipkarten werden beispielsweise solche nach ISO 7816-1,-2,-3 eingesetzt.

Dabei sind Chipkarten 10a, 10b und 10c mit Terminals 11a, 11b, 11c verbindbar. Jedes Terminal enthält einen Abwick-1er 13a, 13b1, 13b2, 13c, der mit jeweils einem Sicherheitsmodul 14a, 14b1, 14b2, 14c verbunden ist. Die gezeigte Konfiguration bezieht sich auf zwei Zahlungsnetzwerke 15a, 15c, in denen ein Host 16a, 16c seinerseits jeweils ein Sicherheitsmodul 17a, 17c enthält und die Hosts über ein weiteres Netzwerk 18 untereinander Transaktionsdaten austauschen können. Anstelle von Sicherheitsmoduln können auch die Hosts in gesicherter Umgebung mit beispielsweise strenger Zugangskontrolle betrieben werden und die Schlüssel auf üblichen Datenträgern ablegt sein. Die Netzwerke 15a, 15c sind beispielsweise X25/Datex-P-Netzwerke, meist als geschlossene Benutzergruppen geschaltet. Das Terminal 11a ist dem Host 16a, das Terminal 11c dem Host 16c zugeordnet und kann daher nur solche Verfahren abwickeln, die von dem Host unterstützt werden. In der Regel ist der jeweilige Abwickler 13a, 13c für den Anbieter bzw. den Dienst, im folgenden auch Transaktionsart, spezifisch. Hierbei stehen auch im folgenden Hosts auch stellvertretend für hierarchische oder vermaschte Netzwerke von Rechnern, für die der Host den Zugang und die Schnittstelle darstellt.

Um daher in dem Terminal 11b zwei verschiedene Karten für die beiden verschiedenen Dienste benutzbar zu machen, sind in dem Terminal 11b zwei Abwickler 13b1, 13b2 vorgesehen, die jeweils mit einem eigenen Sicherheitsmodul 14b1, 14b2 verbunden sind und jeweils einen eigenen, dedizierten Netzwerkanschluß an das jeweilige Netzwerk 15a, 15c besitzen.

Solange nur wenige Terminals und wenige Dienste vorhanden sind, ist der Aufwand der mehrfachen Abwickler in einem Terminal möglich.

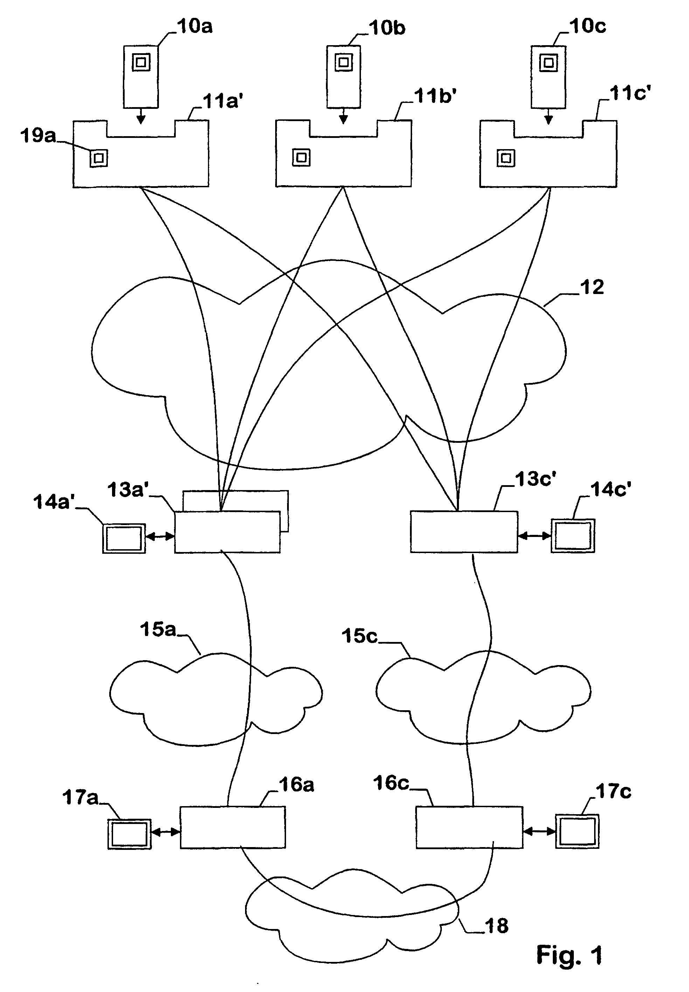

Die Erfindung nun trennt den Abwickler von dem Terminal und ist wie in Fig. 1 dargestellt angeordnet. Hierbei enthalten die Terminals 11a', 11b', 11c' keinen Abwickler bisheriger Art mehr. Es ist lediglich ein Betriebsprogramm, welches nicht gesondert dargestellt ist, vorhanden, das die Kommunikation zur Chipkarte 10a, 10b, 10c bewirkt und für eine gesicherte Verbindung zu verschiedenen Abwicklern 13a', 13c' dient.

Ein offenes Netzwerk 12 übernimmt die Datenvermittlung zwischen den Terminals 11a', 11b', 11c' und Abwicklern 13a', 13c', welche wiederum wie in herkömmlicher Weise über spezifische Netzwerke 15a, 15c mit den Hosts 16a, 16c zusammenwirken. Über diese Netzwerke können weiterhin und zusätzlich Chipkarten-Terminals bekannter Art betrieben werden.

Dieses Netzwerk 12 ist vorzugsweise ein offenes Netzwerk, wie es durch das Internet und die IP-Protokollfamilie im folgenden repräsentiert ist. Durch die allgemeine Verfügbarkeit und offene Architektur ist es jedem der Terminals 11a' , 11b' und 11c' ohne weiteres möglich, jeden der Abwickler 13a', 13c' zu erreichen. Jedes Terminal kann nun, wie noch genauer beschrieben wird, jeden Abwickler erreichen und damit jede Chipkarte annehmen und Transaktionen abwickeln, sofern auch nur ein passender Abwickler im Netz erreichbar ist. Auch ist es sinnvoll, mehrere Abwickler an einem Ort bereitzustellen, wie in Fig. 1 für den Abwickler 13a' dargestellt ist, weil eine Vielzahl von Terminals darauf zugreifen kann und die einmalige Installation nur eines einzigen Abwicklers unmittelbar allen Terminals zur Verfügung steht.

Dabei muß das Betriebsprogramm in dem Terminal zunächst die Art der Chipkarte ermitteln, d.h., den Dienst bzw. das anzuwendende Transaktionsprotokoll und damit einen möglichen Abwickler ermitteln. Dies geschieht durch Auslesen aus der Chipkarte. Chipkarten können auch mehrere Dienste unterstützen; in diesem Fall müßte das Terminal den Benutzer fragen, mit welchem Dienst bezahlt werden soll, sofern dies nicht implizit entschieden werden kann. Bei einer Kreditkarte mit aufladbarer elektronischer Geldbörse könnten beispielsweise Beträge unter DM 20 immer von der Geldbörse und hohe Beträge von der Kreditkartenfunktion abgebucht werden.

Aus dem gewünschten Dienst wird dann beispielsweise ein "uniform resource locator", (URL), gebildet. Dieser kann durch eine Tabelle im Terminal oder durch Anfrage bei einem Abwickler ermittelt werden. Die Verwendung eines URL ist insofern vorteilhaft, weil sie eine Tabelle im Terminal entbehrlich macht, weil die Netzwerkfunktionen dann den nächstliegenden Abwickler für diesen Dienst ermitteln. Ein URL für eine Gold-Kreditkarte von American Express könnte dann lauten
"https://de.amexco.com/credit/gold/Hamburg"
wobei "https" das Protokoll für die Datenübermittlung zwischen Terminal und Abwickler kennzeichnet. In dem URL sind, wie in dem Beispiel ersichtlich, sowohl der Standort in dem Rechnernamen "de.amexco.com" als auch die Stadt codierbar. Durch die Codierung des Rechnernamens wird zwar die Internetadresse gegebenenfalls über den autorisierten Namensserver der Zentrale in den USA angefordert, aber dieser kann auf einen Rechner in Deutschland weisen, so daß trotz einer zentralen Namensverwaltung ein dezentral angeordneter Abwickler angerufen wird. Allein schon die Verwendung eines Codes für das Transaktionsprotokoll in einem Rechnernamen bietet so schon eine flexible Form der Verbindung von einem Terminal zu einem Abwickler.

Dabei wird ein gegen manipulationen wie absichtliche, gezielte Verfälschung oder Ausspähung, gesichertes Protokoll verwendet. Ein Beispiel für eine solche Protokollfamilie ist in dem Entwurf "The SSL Protocol Version 3.0" von A.E.Freier, Ph. Karlton und P.C. Kocher vom März 1996 enthalten, der z.B. am 10.03.1997 unter dem URL
ftp://ietf.cnri.reston.va.us/internet-drafts/draftfreier-ssl-version3-01.txt
bei der "Internet Engineering Task Force" (IEFT) abgerufen werden konnte. Dieses Protokoll erlaubt die Verwendung einer Vielzahl von kryptographischen Protokollen und Verfahren, um die gegenseitige Authentizität zu sichern und die übertragenen Daten gegen Manipulation und Ausspähung zu sichern.

Vorzugsweise wird dabei in dem Terminal 11a' ein Sicherheitsmodul 19a eingesetzt, in dem ein geheimer Schlüssel für den Aufbau der SSL-Verbindung gespeichert ist, der für dieses Terminal einzigartig und kennzeichnend ist. In bekannter Art ist im Falle eines symmetrischen Verfahrens dieser geheime Schlüssel in einem Sicherheitsmodul jedes Abwicklers, mit dem das Terminal Verbindung aufnehmen können soll, gespeichert. Bevorzugt werden jedoch asymmetrische Verfahren eingesetzt, bei denen nur im Sicherheitsmodul des Terminals ein privater Schlüssel gespeichert ist und der daraus abgeleitete Schlüssel als sogenannter öffentlicher Schlüssel den Abwicklern zur Verfügung steht und lediglich für ihre Authentizität durch eine der bekannten Maßnahmen gesorgt werden muß. Das Sicherheitsmodul in dem Terminal wird also primär für die Sicherung der Verbindungen zu den Abwicklern benötigt, während die Sicherheitsmodule in den Abwicklern auch für die Sicherung der Chipkarten-Transaktionen und dem damit verbundenen herkömmlichen Key-Management dienen.

In einer Weiterbildung der Erfindung wird das Sicherheitsmodul des Terminals als Pufferspeicher für Schlüssel benutzt, die zusammen mit Programm-Moduln von einem Abwickler bezogen werden. Diese Programm-Moduln können dann unter Verwendung der im Sicherheitsmodul abgelegten Schlüssel eine Transaktion mit der Chipkarte lokal abwikkeln. Handelt es sich um eine Geldkarte, so werden die Beträge auch, wie bei einer Geldkarte üblich, im Sicherheitsmodul abgelegt und erst am Tagesende kryptographisch gesichert übermittelt. Die Übermittlung erfolgt dabei bevorzugt an den Abwickler, der dem Terminal das Programm-Modul und den oder die zugehörigen Schlüssel über die gesicherte Netzwerkverbindung übertragen hat. Zur Leistungssteigerung können mehrere funktionsgleiche Abwicker vorhanden sein, die dann in diesem Sinn als dieselben Abwickler gelten sollen.

Einige Kartentypen können zwar die gesamte Transaktion lokal abwickeln, jedoch muß nach Transaktionsende ein Transaktionssatz über ein Netzwerk an eine Zentrale übermittelt werden. Auch in diesem Fall kann von dem Abwickler ein Programm-Modul übermittelt und in dem Terminal ausgeführt werden, welches dann den Transaktionssatz an seinen Abwickler schickt. Es kann durchaus sinnvoll sein, für jede Transaktion den Programm-Modul samt Schlüssel über die gesicherte Verbindung des Netzwerkes zu übertragen, anstatt die Transaktionsschritte einzeln zu übertragen. Insbesondere in einem Datagramm-orientierten Netzwerk wie dem Internet, bei dem gelegentliche Verzögerungen nicht auszuschließen sind, fällt dann eine Wartezeit allenfalls am Beginn oder Ende einer Transaktion an, aber nicht zwischen den einzelnen Transaktionsschritten.

Dabei werden die Programm-Moduln auf herkömmlichem Massenspeicher abgelegt, aber zur Sicherheit gegen Verfälschung signiert und gegebenenfalls auch verschlüsselt, wobei der passende Schlüssel zur Prüfung der Signatur auch in dem Sicherheitsmodul gespeichert ist. Die Auswahl der Programm-Moduln geschieht über die Kartenart bzw. einen daraus abgeleiteten Code. Terminal und Sicherheitsmodul können also als Pufferspeicher ('cache') angesehen werden. Indem insbesondere das Sicherheitsmodul zumindest teilweise als Pufferspeicher dient, ist eine praktisch beliebig große Anzahl von Chipkarten mit dem Terminal verwendbar und diese Anzahl ohne Wartungsarbeiten an dem Terminal, wie es das Hinzufügen eines weiteren Sicherheitsmoduls bedeuten würde, dynamisch erweiterbar.

Das Protokoll "HTTP" bzw. seine gesicherte Variante "HTTPS" erlaubt dabei eine besonders einfache Möglichkeit der Pufferung. In dem HTTP/1.0 beschreibenden Dokument RFC 1945 von Bernes-Lee u.a., Ausgabe Mai 1996, ist in Abschnitt 10.9 der Zusatz "if-modified-since" vorgesehen. Ein auf diese Art angefordertes Dokument wird nur dann übertragen, wenn es in neuerer Version vorliegt und kann auch zur Zwischenstationen gepuffert werden. Es ist also möglich, ein Programm-Modul samt benötigtem Schlüssel zu verpacken, verschlüsseln und zu signieren und mit einem durch einen URL bezeichneten Netzwerknamen zu versehen. Mit Einführen der Chipkarte bestimmt das Betriebsprogramm über den Code der Kartenart eine URL, fügt das Datum der vorhandenen, gepufferten Version hinzu und sendet eine Anforderung an den Abwickler. Ist die gepufferte Version aktuell, wird nur der Antwortcode "304" übertragen, und die gepufferte Version benutzt. Andernfalls wird die übertragene Version entpackt, abgelegt und ausgeführt.

In einer weiteren Variante können auch vor der Installation bereits Programm-Module und Schlüssel in dem Terminal derart abgelegt werden, als wenn sie über eine Netzverbindung übertragen und gepuffert worden seien. Dies ist für vorbekannt häufig oder überwiegend benutzte Anwendungen eine Möglichkeit, die Netzlast zu reduzieren. Auch kann ein Indikator in der Pufferspeicherverwaltung diese Einträge derart kennzeichnen, daß eine Verdrängung im Pufferspeicher vermieden werden oder ganz unterbleiben soll. Die jeweilige Anfrage bei dem durch die Chipkarte bestimmten Abwickler, ob dort eine neue Version vorliegt, ist davon nicht betroffen und ersetzt gegebenenfalls die vorgespeicherte Version.

Bevorzugt wird, wie beschrieben, das Programmmodul zusammen mit einem oder mehreren Schlüsseln vom Abwickler in das Terminal übertragen. Es ist jedoch auch möglich, Programmmoduln und Schlüssel getrennt zu verwalten und handzuhaben, wenn beispielsweise die dadurch erhöhte Netzbelastung der erhöhten Flexibilität entgegenkommt.

Durch die gegenüber den Beschränkungen der Chipkarte gesteigerten Rechenleistungen in einem Terminal, die in den bislang ausgegebenen und weiterzuverwendenden Chipkarten nicht gegeben ist, können nunmehr auch Public-Key-Verfahren für die Sicherung der Datenkommunikation, insbesondere die Authentisierung und Erzeugung von Sitzungsschlüsseln, eingesetzt werden. Weitere Angaben hierzu kann auch dem SSL-Dokument und den dort aufgeführten Literaturverweisen entnommen werden. Für die Zertifizierung öffentlicher Schlüssel können beispielsweise Zertifikate nach der Norm X509.3 dienen.

Das Sicherheitsmodul kann als Chipkarte oder als aus den GSM-Mobiltelefonen bekanntes SIM-Modul ausgeführt sein. Auch sind Sonderanfertigungen beispielsweise auf Basis des Chips SL 44CR80S der Firma Siemens möglich.

Nachdem die gesicherte Verbindung zwischen Terminal und Abwickler aufgebaut ist, vermittelt das Betriebsprogramm die Kommunikation zwischen Abwickler und Chipkarte. In den meisten Fällen werden dabei Datenblöcke von dem Betriebsprogramm in das Protokoll der Netzwerkverbindung umgesetzt und transparent vermittelt. In vielen Fällen wird jedoch eine Kommunikation mit einem Benutzer, sprich dem Besitzer der Chipkarte, benötigt, damit dieser den Wert der Transaktion angezeigt bekommt und die Transaktion anschließend bestätigen kann. Hierzu sind an dem Terminal Ein- und Ausgabeeinrichtungen wie Tastatur und Anzeige vorgesehen. Diese werden dem Abwickler über die gesicherte Verbindung zur Verfügung gestellt, denn nur der Abwickler besitzt den authentischen Wert für die Transaktion. Alternativ kann das Betriebsprogramm diese Daten aus der Kommunikation zwischen Chipkarte und Abwickler ermitteln und von sich aus anzeigen und die Bestätigung an den Abwickler übermitteln.

Als Terminal kann auch ein Personal Computer dienen, der mit einer Leseeinrichtung für Chipkarten ausgerüstet ist. Das Betriebsprogramm des Terminals wird auf dem Prozessor des PC ausgeführt und hat damit zusätzlich Zugriff auf den Bildschirm und die Tastatur. Damit kann insbesondere bei interaktivem Dialog, beispielsweise über einen Zugang zum Internet und dem WorldWideWeb, ein Bezahlvorgang ausgelöst werden. Besonders vorteilhaft ist dabei, daß die Erfindung zur Kommunikation zwischen Chipkarte und Abwickler dasselbe Datennetz, nämlich das Internet, verwenden kann, das bereits für den interaktiven Dialog benutzt wird. Bevorzugt enthält die Leseeinrichtung für die zur Bezahlung benutzte Chipkarte einen eigenen Prozessor und ein Sicherheitsmodul, vorzugsweise in Form einer weiteren, eingebauten Chipkarte. Der Prozessor auf der Leseeinrichtung übernimmt die Kommunikation zwischen Chipkarte und Abwickler und wendet sich an den Prozessor des Personal Computers für Dialoge mit dem Benutzer.

Sofern das damit erreichbare Sicherheitsniveau für den Benutzer eines Personal Computers akzeptabel ist, kann auch auf ein besonderes Sicherheitsmodul und einen Prozessor auf der Leseeinrichtung verzichtet werden. Dies ist der Fall, wenn der PC nicht allgemein, sondern nur wenigen bekannten Personen zugänglich ist und eine Verfälschung des Betriebsprogramms nicht zu befürchten ist, wie es sich in der Wohnung eines Privatanwenders darstellt. Für den Manipulationsschutz der Kommunikation mit dem Abwickler kann auch gänzlich auf einen permanenten geheimen Schlüssel verzichtet werden, indem beispielsweise für die Kommunikation Sitzungsschlüssel nach dem Verfahren von Diffie und Hellmann gebildet werden. Je nach Anwendungsfall ist denkbar, daß die Authentizität des Terminals für den Abwickler nicht unabdingbar ist, da die eigentlichen Transaktionen mit der Chipkarte abgewickelt werden.

Anstelle von speziellen Terminals beispielsweise in Verbindung mit Kassen oder Personal Computern kann ein Terminal nach der Erfindung auch in einen Waren- oder Dienstleistungsautomaten, Informationsterminals eingeschlossen, eingebaut sein. Ein- und Ausgabeeinheiten sind dann beispielsweise die Wahltaster für eine Ware und die Ausgabemechanik für die gewählte Ware.

Es ist auch denkbar, daß Chipkarten ausgegeben werden, die als weitere Anwendung die Erzeugung von Sitzungsschlüsseln für eine gesicherte Internet-Verbindung nach beispielsweise dem SSL-Protokoll enthalten. Damit ist dann auf Personal Computern auf der Leseeinrichtung für Chipkarten weder ein eigener Prozessor noch ein Sicherheitsmodul notwendig.

In Fig. 1 nicht dargestellt, kann jeder Host 16a, 16c auch mit dem offenen Datennetz 12 verbunden sein und die Abwicklerfunktion direkt unterstützen, sofern Sicherheitserwägungen nicht dagegen sprechen.

Ein besonderer Vorteil der Erfindung liegt darin, daß lediglich die Abwickler angepaßt werden müssen bzw. zusätzliche Abwickler bereitgestellt werden müssen, die Netzwerke 15a, 15c für die Transaktionsabwicklung und die Host-Anwendungen 16a, 16c unverändert bestehen bleiben können und damit die bisherigen Anwendungen unverändert weiterbetrieben werden können.

Da ein Terminal auch zusätzlich zu einem Chipkartenleser mit einem Magnetkartenleser beziehungsweise einem Kombinationsleser ausgestattet werden kann, ist in einer Fortbildung das Betriebsprogramm dahin erweitert, daß es die Daten der Magnetspur und eventuell vorhandene Sicherheitsmerkmale an den Abwickler übertragen kann. Damit können die bisherigen, auf Magnetkarte basierenden Verfahren weiter benutzt werden. Dies gilt in gleicher Weise auch für Chipkarten ohne Prozessor, die einen Speicher zu lesen und zu beschreiben erlauben. In dem Maße, wie diese Karten aus dem Verkehr geraten, kann die Anzahl der Abwickler im Netz reduziert werden.

Ein Sicherheitsvorteil ergibt sich dadurch, daß die für die Transaktionsabwicklung notwendigen geheimen Schlüssel nicht mehr in dem Terminal gespeichert sein müssen. Dies hat bislang dazu geführt, daß Terminals bei öffentlicher Aufstellung besonders geschützt wurden, um jeden Angreifer auf das Sicherheitsmodul von vornherein zu entmutigen. Ein erfolgreicher Angriff auf ein Sicherheitsmodul, der lediglich die Kommunikation zwischen Terminal und Abwickler betrifft, hat weniger gravierende Auswirkungen als einer auf ein herkömmliches Sicherheitsmodul. Auch können die Abwickler als Prozesse auf Hochleistungsrechnern ablaufen, so daß eine besonders schnelle Reaktion möglich ist und eine Vielzahl von Abwicklern ein gemeinsames schnelles Sicherheitsmodul benutzen können.

## Patentansprüche

1. Verfahren zur Abwicklung von Transaktionen, die durch eine Chipkarte (10a-c) gesichert werden, mit den Merkmalen:
- die Chipkarte (10a-c) ist mit einem Terminal (11a'-c') verbunden, welches über ein Datennetzwerk (12) an mindestens einen Abwickler (13a', 13c') von Transaktionen angeschlossen ist,
- der Abwickler (13a', 13c') ist ferner über ein weiteres Datennetzwerk mit einem oder mehreren Transaktionshosts (16a, 16c) verbunden und umfasst mindestens ein Sicherheitsmodul (14a', 14c') zur Sicherung von Transaktionen gegenüber dem Transaktionshost (16a, 16c),
- das Terminal (11a'-c') enthält ein Betriebsprogramm, welches nach dem Verbinden der Chipkarte (10a-c) mit dem Terminal (11a'-c') einen Code für ein Transaktionsverfahren, gemäß dem die Transaktion durchzuführen ist, anhand von aus der Chipkarte auszulesenden Angaben bestimmt,
- aus dem Code des Transaktionsverfahrens wird die Netzwerkadresse eines Abwicklers (13a', 13c') bestimmt,
- woraufhin das Betriebsprogramm eine durch kryptographische Verfahren gesicherte Verbindung zwischen Terminal (11a'-c') und Abwickler (13a', 13c') aufbaut,
- und danach die Transaktion durch Vermittlung zwischen Chipkarte (10a-c) und Abwickler (13a',13c') abwickelt, wobei der Abwickler die Transaktionsschritte gegenüber dem Transaktionshost (16a, 16c) vermittelt.

2. Verfahren nach Anspruch 1, wobei insbesondere zur Bestätigung der Transaktion an das Terminal angeschlossene Ein- und Ausgabeeinheiten durch die Datenverbindung zwischen Terminal und Abwickler für den Abwickler benutzbar sind.

3. Verfahren nach Anspruch 1 oder 2, wobei der Abwickler sowohl zur Sicherung der Verbindung mit dem Terminal wie auch zur Sicherung der Transaktionen mit der Chipkarte gesicherte Schlüssel mindestens eines direkt verbundenen Sicherheitsmoduls verwendet.

4. Verfahren nach Anspruch 3, wobei das Terminal zur Sicherung der Verbindung mit dem Abwickler gesicherte Schlüssel eines direkt verbundenen Sicherheitsmoduls verwendet.

5. Verfahren nach Anspruch 4, wobei zur Sicherung der Verbindung zwischen Terminal und Abwickler eine Anwendung der Chipkarte und ein gesichert in der Chipkarte gespeicherter Schlüssel verwendet wird, mittels derer ein Sitzungsschlüssel für die weitere Abwicklung der Transaktion bestimmt oder ein öffentlicher Schlüssel verifiziert wird.

6. Verfahren nach einem der Ansprüche 1 bis 5, wobei zur Verbindung von Terminal und Abwickler ein TCP/IP Protokoll verwendet wird.

7. Verfahren nach Anspruch 6, wobei zur Sicherung der TCP/IP Verbindung das Protokoll SSL verwendet wird.

8. Verfahren nach einem der Ansprüche 1 bis 7, wobei die Bestimmung der Netzwerkadresse eines für das Transaktionsverfahren geeigneten Abwicklers durch eine Anfrage bei einem dem Terminal zugeordneten Abwickler ermittelt wird.

9. Verfahren nach Anspruch 1 bis 7, wobei die Bestimmung der Netzwerkadresse eines für das Transaktionsverfahren geeigneten Abwicklers dadurch ermittelt wird, daß der Code das Transaktionsverfahren als Teil einer symbolischen Netzwerkadresse verwendet wird, welche durch dem Netzwerk angehörende Server für die Bestimmung von Netzwerkadressen aufgelöst wird.

10. Verfahren nach einem der Ansprüche 2 bis 9, wobei das Betriebsprogramm des Terminals den Benutzer zur Eingabe einer geheimen Zeichenkette auffordert, diesen gegen ein Referenzwert, insbesondere unter Anwendung von kryptographischen Verfahren, überprüft und lediglich das Ergebnis der Überprüfung über die gesicherte Verbindung an den Abwickler überträgt.

11. Verfahren nach einem der Ansprüche 1 bis 9, wobei mittels der Verbindung ein Programmmodul vom Abwickler zu dem Terminal übertragen und dort anstelle mindestens eines Teils des Programmcodes des Abwicklers ausgeführt wird.

12. Verfahren nach einem der Ansprüche 4 bis 9, wobei mittels der Verbindung ein Schlüssel vom Abwickler in das Sicherheitsmodul übertragen wird und zur gesicherten Abwicklung mindestens eines Teils einer Transaktion mit der Chipkarte dient.

13. Verfahren nach Anspruch 11 oder 12, wobei die von dem Abwickler übertragenen Programmoduln oder Schlüssel in der Art eines Pufferspeichers im Terminal abgelegt werden und anstelle einer erneuten Übertragung verwendet werden.

14. Verfahren nach Anspruch 13, wobei vor einer Benutzung eines gepufferten Progammmoduls oder Schlüssels durch eine Anfrage an den Abwickler die Aktualität überprüft und gegebenenfalls eine aktuelle Version übertragen und zukünftig verwendet wird.

15. Verfahren nach Anspruch 14, wobei zur Anforderung mit Aktualitätsprüfung das Protokoll HTTP oder HTTPS verwendet wird.

16. Anordnung zur Abwicklung von Transaktionen, die durch eine mit einem Terminal (11a'-c') verbindbare Chipkarte (10a-c) gesichert werden, mit den Merkmalen:
- Das Terminal (11a'-c') ist über ein Datennetzwerk (12) an mindestens einen Abwickler (13a',13c') von Transaktionen angeschlossen, der über ein weiteres Netzwerk (15a, 15c) mit mindestens einem Transaktionshost (16a, 16c) zusammenwirkt,
- das Terminal (11a'-c') enthält eine Einrichtung zum Ermitteln eines Codes für ein zu benutzendes Transaktionsverfahren anhand von aus der Chipkarte auszulesenden Angaben nach Verbindung der Chipkarte (10a-c) mit dem Terminal (11a'-c'),
- das Terminal (11a'-c') enthält Adressabbildungsmittel zum Adressieren eines über das Datennetzwerk (12) erreichbaren Abwicklers (13a', 13c') abhängig vom Code des Transaktionsverfahrens,
- das Terminal (11a'-c') enthält eine Verbindungseinrichtung zum Aufbau einer Verbindung über das Datennetzwerk (12) zum adressierten Abwickler (13a',13c'),
- das Terminal (11a'-c') und der Abwickler (13a',13c') enthalten Vorrichtungen zum Sichern der Verbindung zwischen Terminal (11a'-c') und Abwickler gegen Manipulationen,
- der mindestens eine Abwickler (13a',13c') enthält Einrichtungen zum gesicherten Abwickeln von Transaktionen mit der Chipkarte (10a-c) und zum Vermitteln der Transaktion gegenüber dem Transaktionshost (16a, 16c).

17. Anordnung nach Anspruch 16, wobei das Terminal Ein-Ausgabevorrichtungen enthält, die von dem Abwickler über das Netzwerk während der Abwicklung der Transaktion benutzbar sind.

18. Anordnung nach Anspruch 16 oder 17, wobei der Abwickler mindestens eine Einrichtung für die sichere Speicherung von kryptographischen Schlüsseln sowohl für die Sicherung der Verbindung zum Betriebsprogramm des Terminals als auch für die Sicherung der Transaktion mit der Chipkarte enthält.

19. Anordnung nach Anspruch 18, wobei das Terminal eine Einrichtung für die sichere Speicherung von Schlüsslen für die Sicherung der Verbindung mit dem Abwickler umfaßt.

20. Anordnung nach Anspruch 19, wobei die Chipkarte eine Einrichtung umfaßt, mit der ein Sitzungsschlüssel für die Sicherung der Verbindung zwischen Terminal und Abwickler in dem Terminal erzeugbar ist.

## Claims

1. A method for executing transactions that are protected by a chip card (10a-c), wherein:
- the chip card (10a-c) is connected to a terminal (11a' - c') that is connected via a data network (12) to at least one handler (13a', 13c') of transactions,
- the handler (13a', 13c') is further connected via a further data network to one or to a plurality of transaction hosts (16a, 16c) and comprises at least one security module (14a', 14c') to protect transactions with the transaction host (16a, 16c),
- the terminal (11a' - c') contains an operating program which, after connecting the chip card (10a-c) to the terminal (11 a' - c') determines a code for a transaction procedure according to which the transaction is to be carried out, the code being determined by data that can be read off the chip card,
- the network address of a handler (13a', 13c') is determined from the code of the transaction procedure,
- whereupon a secure connection is set up by cryptographic methods between the terminal (11a' -c') and the handler (13a', 13c'),
- and the transaction is subsequently implemented by communication between the chip card (10a -c) and the handler (13a', 13c'), the handler communicating the transaction steps to the transaction host (16a, 16c).

2. A method according to Claim 1, wherein to confirm the transaction in particular, input and output units connected to the terminal can be used for the handler due to the data connection that exists between the terminal and the handler.

3. A method according to Claim 1 or 2, wherein the handler uses protected keys of at least one directly connected security module both to secure the connection to the terminal and to secure transactions with the chip card.

4. A method according to Claim 3, wherein the terminal uses protected keys of a directly connected security module to protect the connection with the handler.

5. A method according to Claim 4, wherein employment of the chip card and a protected key stored in the chip card are used to protect the connection between the terminal and handler, said keys determining a session key for the further handling of the transaction or verifying a public key.

6. A method according to one of Claims 1 to 5, wherein a TCP/IP protocol is used to connect the terminal and the handler.

7. A method according to Claim 6, wherein the protocol SSL is used to secure the TCP/IP connection.

8. A method according to one of Claims 1 to 7, wherein the determination of the network address of a handler suitable for the transaction procedure is achieved by a request at a handler assigned to said terminal.

9. A method according to Claim 1 to 7, wherein the determination of the network address of a handler suitable for the transaction procedure is achieved in that the code for the transaction procedure is used as part of a symbolic network address that is resolved by servers belonging to the network, for the determination of network addresses.

10. A method according to one of Claims 2 to 9, wherein the terminal operating program prompts the user to input a secret character string, checks the user against a reference value, using cryptographic methods in particular, and transmits only the result of the check to the handler via the secure connection.

11. A method according to one of Claims 1 to 9, wherein a program module is transmitted via the connection from the handler to the terminal and is carried out there instead of at least part of the handler's program code.

12. A method according to one of Claims 4 to 9, wherein a key is transmitted via the connection from the handler to the security module and is used there for secure handling of at least part of a transaction with the chip card.

13. A method according to Claim 11 or 12, wherein the program modules or keys transmitted by the handler are stored in the terminal in a kind of buffer memory and can be used instead of a new transmission.

14. A method according to Claim 13 for checking, before use of a buffered program module or of a key in the buffer memory, whether said module or key is current by issuing a request to the handler and if warranted, transmitting a current version and using it in future.

15. A method according to Claim 14, wherein the HTTP or HTTPS protocol is used for a request involving a check of whether the module or key is current.

16. An arrangement for handling transactions that are protected by a chip card (10a -c) connectable to a terminal (11a' - c'), wherein:
- the terminal (11a' - c') is connected via a data network (12) to at least one handler (13a', 13c') of transactions, which handler interacts via a further network (15a, 15c) with at least one transaction host (16a, 16c),
- said terminal (11a' - c') contains a means for determining a code for a transaction method to be employed using data that are to be read off the chip card after the chip card has been connected to the terminal (11a' - c'),
- the terminal (11a' - c') contains means for address formation to address a handler (13a', 13c') reachable via the data network (12), said means depending on the code for the transaction procedure,
- the terminal (11a' - c') contains a connection device to set up a connection via the data network (12) to the handler addressed (13a', 13c'),
- the terminal (11a' - c') and the handler (13a', 13c') contain devices to protect the connection between the terminal (11a' - c') and the handler against manipulation,
- the at least one handler (13a', 13c') contains devices for the secure handling of transactions with the chip card (10a-c) and to negotiate the transaction with the transaction host (16a, 16c).

17. An arrangement according to Claim 16, wherein the terminal contains input and output devices that can be used by the handler over the network during the handling of the transaction.

18. An arrangement according to Claim 16 or 17, wherein the handler contains at least one device for secure storing of cryptographic keys both to protect the connection to the terminal's operating program and to protect the transaction with the chip card.

19. An arrangement according to Claim 18, wherein the terminal comprises a device for secure storing of keys to protect the connection with the handler.

20. An arrangement according to Claim 19, wherein the chip card comprises a device for generating a session key in the terminal to protect the connection between the terminal and the handler.

## Revendications

1. Procédé pour l'exécution de transactions protégées par une carte à puce (10a-c), ayant les caractéristiques :
- la carte à puce (10a - c) est connectée à un terminal (11a' - c'), lequel est raccordé à au moins un exécuteur (13a', 13c') de transactions par l'intermédiaire d'un réseau de données (12),
- l'exécuteur (13a', 13c') est en outre raccordé à un ou plusieurs hôtes de transaction (16a, 16c) par l'intermédiaire d'un autre réseau de données et comprend au moins un module de sécurité (14a', 14c') pour la protection de transactions par rapport à l'hôte de transaction (16a, 16c),
- le terminal (11a' - c') comprend un programme d'exploitation, lequel, après la connexion de la carte à puce (10a - c) au terminal (11a' - c'), détermine un code pour un procédé de transaction, selon lequel la transaction doit être exécutée, à l'aide d'indications à lire à partir de la carte à puce,
- l'adresse de réseau d'un exécuteur (13a', 13c') est déterminée à partir du code du procédé de transaction,
- sur quoi le programme d'exploitation établit une connexion entre le terminal (11a' - c') et l'exécuteur (13a', 13c'), protégée par un procédé cryptographique,
- et la transaction est ensuite exécutée par commutation entre la carte à puce (10a - c) et l'exécuteur (13a', 13c'), l'exécuteur commutant les étapes de transaction par rapport à l'hôte de transaction (16a, 16c).

2. Procédé selon la revendication 1, des unités d'entrée et de sortie, raccordées au terminal notamment pour confirmer la transaction, pouvant être utilisées par l'exécuteur en raison de la connexion de données entre le terminal et l'exécuteur.

3. Procédé selon la revendication 1 ou 2, l'exécuteur utilisant des codes protégés d'au moins un module de sécurité raccordé directement, aussi bien pour la protection de la connexion avec le terminal que pour la protection des transactions au moyen de la carte à puce.

4. Procédé selon la revendication 3, le terminal destiné à la protection de la connexion avec l'exécuteur utilisant des codes protégés d'un module de sécurité connecté directement.

5. Procédé selon la revendication 4, une application de la carte à puce et un code mémorisé de manière protégée dans la carte à puce étant utilisés pour la protection de la connexion entre le terminal et l'exécuteur, au moyen desquels un code de session est déterminé pour la suite de l'exécution de la transaction ou un code public est vérifié.

6. Procédé selon l'une quelconque des revendications 1 à 5, un protocole TCP/IP étant utilisé pour la connexion du terminal et de l'exécuteur.

7. Procédé selon la revendication 6, le protocole SSL étant utilisé pour la protection de la connexion TCP/IP.

8. Procédé selon l'une quelconque des revendications 1 à 7, la détermination de l'adresse de réseau d'un exécuteur approprié au procédé de transaction étant établie par une demande auprès d'un exécuteur affecté au terminal.

9. Procédé selon les revendications 1 à 7, la détermination de l'adresse de réseau d'un exécuteur approprié au procédé de transaction étant établie du fait que le code utilise le procédé de transaction comme une partie d'une adresse symbolique de réseau, laquelle est déchiffrée par des serveurs appartenant au réseau pour la détermination d'adresse de réseau.

10. Procédé selon l'une quelconque des revendications 2 à 9, le programme d'exploitation du terminal invitant l'utilisateur à entrer une chaîne secrète de caractères, vérifiant celui-ci par une valeur de référence, notamment en utilisant des procédés cryptographiques, et transmettant uniquement le résultat de la vérification à l'exécuteur au moyen de la connexion protégée.

11. Procédé selon l'une quelconque des revendications 1 à 9, un module de programme étant transmis de l'exécuteur au terminal au moyen de la connexion, et y étant exécuté au lieu d'au moins une partie du code de programme de l'exécuteur.

12. Procédé selon l'une quelconque des revendications 4 à 9, un code étant transmis par l'exécuteur dans le module de sécurité au moyen de la connexion et servant à l'exécution protégée d'au moins une partie d'une transaction au moyen de la carte à puce.

13. Procédé selon la revendication 11 ou 12, les modules de programme ou les codes transmis par l'exécuteur étant déposés dans le terminal de manière similaire à une mémoire tampon et étant utilisés au lieu d'une nouvelle transmission.

14. Procédé selon la revendication 13, l'actualité étant vérifiée avant l'utilisation d'un module de programme tampon ou d'un code au moyen d'une demande à l'exécuteur et une version actuelle étant éventuellement transmise et utilisée à l'avenir.

15. Procédé selon la revendication 14, le protocole HTTP ou HTTPS étant utilisé pour la demande avec vérification d'actualité.

16. Dispositif pour l'exécution de transactions protégées au moyen d'une carte à puce (10a - c) connectable à un terminal (11 a' - c'), ayant les caractéristiques :
- le terminal (11a' - c') est raccordé à au moins un exécuteur (13a', 13c') de transactions par l'intermédiaire d'un réseau de données (12), cet exécuteur agissant avec au moins un hôte de transaction (16a, 16c) par l'intermédiaire d'un autre réseau (15a, 15c),
- le terminal (11a' - c') comprend un dispositif pour déterminer un code pour un procédé de transaction à utiliser, à l'aide d'indications à lire à partir de la carte à puce après la connexion de la carte à puce (10a - c) au terminal (11'a - c'),
- le terminal (11 a' - c') comprend des moyens de représentation d'adresses pour l'adressage d'un exécuteur (13a', 13c') accessible par l'intermédiaire du réseau de données (12), en fonction du code du procédé de transaction,
- le terminal (11a' - c') comprend un dispositif de connexion pour l'établissement d'une connexion vers l'exécuteur (13a', 13c') adressé par l'intermédiaire du réseau de données (12),
- le terminal (11a' - c') et l'exécuteur (13a', 13c') comprennent des dispositifs pour protéger la connexion entre le terminal (11a' - c') et l'exécuteur contre les manipulations,
- l'au moins un exécuteur (13a', 13c') comprend des dispositifs pour l'exécution protégée de transactions au moyen de la carte à puce (10a - c) et pour la commutation de la transaction par rapport à l'hôte de transactions (16a, 16c).

17. Dispositif selon la revendication 16, le terminal comprenant des dispositifs d'entrée et de sortie qui sont utilisables par l'exécuteur pendant l'exécution des transactions par l'intermédiaire du réseau.

18. Dispositif selon la revendication 16 ou 17, l'exécuteur comprenant au moins un dispositif pour la mémorisation fiable de codes cryptographiques, aussi bien pour la protection de la connexion vers le programme d'exploitation du terminal que pour la protection de la transaction au moyen de la carte à puce.

19. Dispositif selon la revendication 18, le terminal comprenant un dispositif pour la mémorisation fiable de codes pour la protection de la connexion avec l'exécuteur.

20. Dispositif selon la revendication 19, la carte à puce comprenant un dispositif, avec lequel un code de session peut être créé dans le terminal pour la protection de la connexion entre le terminal et l'exécuteur.
